# EUROPÄISCHE PATENTSCHRIFT

(11) **EP 2 005 555 B1**
(45) Veröffentlichungstag und Bekanntmachung des Hinweises auf die Patenterteilung: **15.05.2013**
(21) Anmeldenummer: 07727582.4
(22) Anmeldetag: 30.03.2007
(51) Int. Cl.: H02K 3/12, H02K 1/16

(54) **STATOR FÜR EINE MEHRPHASIGE ELEKTRISCHE MASCHINE UND VERFAHREN ZU DESSEN HERSTELLUNG**
STATOR FOR A POLYPHASE ELECTRICAL MACHINE, AND METHOD FOR ITS PRODUCTION
STATOR POUR MACHINE ELECTRIQUE MULTIPHASEE ET PROCEDE POUR SA FABRICATION

(30) Priorität: 31.03.2006 DE 102006016249
(43) Veröffentlichungstag der Anmeldung: 24.12.2008
(73) Patentinhaber: Robert Bosch GmbH, 70442 Stuttgart (DE)
(72) Erfinder: RAU, Eberhard, 70825 Korntal-Muenchingen (DE); SHENDI, Alexander, 71679 Asperg (DE)
(86) Internationale Anmeldenummer: PCT/EP2007/053110
(87) Internationale Veröffentlichungsnummer: WO 2007/113253

(56) Entgegenhaltungen:
- EP-A1- 1 223 657
- WO-A1-2005/064766
- WO-A2-96/15574
- DE-A1- 3 704 226
- DE-A1- 19 736 645
- FR-A- 2 376 544
- JP-A- 2000 350 390
- US-A- 5 804 896
- US-A- 6 023 119
- US-A1- 2005 108 870
- US-A1- 2005 280 327

## Beschreibung

### Stand der Technik

Die Erfindung betrifft eine mehrphasige elektrische Maschine, insbesondere einen mehrphasigen Generator für Kraftfahrzeuge, mit einem Stator nach dem Oberbegriff des Anspruchs 1, sowie ein Verfahren zur Herstellung eines Stators nach Anspruch 17.

Es sind bereits verschiedene Verfahren und Anordnungen zur Erlangung eines hohen Nutfüllfaktors bei Generatoren vorgeschlagen worden, bei denen mehr als 60% der Nut mit Kupferdraht gefüllt ist, z.B. aus der DE10302947A1, der DE10306147A1 oder der EP1372242A2. Es können U-förmige Verbindungsstücke von einer Stirnseite axial durch die Statornuten gesteckt, auf der gegenüberliegenden Seite gebogen und miteinander verschweißt werden. Dieses Verfahren ist sehr aufwändig und durch die hohe Zahl der Schweißpunkte teuer. Es können Wicklungen in die offenen Nuten eines flachen Blechpakets eingelegt und anschließend das Blechpaket mitsamt den Wicklungen rund gebogen werden. Auch dieses Verfahren ist aufwändig und bringt noch Toleranzprobleme mit sich.

Aus der US 2005/0280327 A1 ist ein gattungsgemäßer Stator bekannt, der mit einer Nut und auf der gegenüberliegenden Seite mit einem Statorjoch versehen ist, wobei benachbarte Nuten von einem Zahn mit einer bestimmten Zahnbreite voneinander getrennt sind. Aus den Druckschriften US 6,023,119 A, JP 2000-350390 A, US 5804896 A und WO 96/15574 A2 sind weitere Statoren der eingangs genannten Art bekannt

Mit der vorliegenden Lösung wird angestrebt, durch eine geeignete Gestaltung des Stators die zuvor genannten Nachteile zu beseitigen, zumindest aber deutlich zu reduzieren.

### Vorteile der Erfindung

Es wird davon ausgegangen, dass Wicklungen in den Nuten eines runden Blechpakets mittels Wickeldomen eingefügt werden, wobei eine Wicklung von einem Dorn aufgenommen und dann in die offenen Nuten des Blechpakets radial eingelegt wird und wobei die Drahtbreite im Wesentlichen der Nutbreite abzüglich der Nutisolation entspricht.

Der erfindungsgemäße Stator weist ein Verhältnis von Zahnbreite am Zahnkopf zur Jochhöhe zwischen 0,3 und 0,8 und ein Verhältnis von Zahnbreite am Zahnkopf zur Nutbreite am Zahnkopf zwischen 0,3 und 3, und/oder ein Verhältnis von Masse des Drahts in der Nut zur Gesamtmasse des Drahts zwischen 0.43 und 0,55 auf, wobei die Nutschlitzbreite im Wesentlichen gleich der Nutbreite am Zahnkopf ist. Die Gesamtkupfermasse bezieht die Anschlussdrähte mit ein. Dadurch ist jeweils alternativ oder in Kombination eine optimierte Auslegung von Zahnbreite zu Jochhöhe, von Zahnbreite zu Nutbreite und/oder der Kühlwirkung des Stators erreicht. Vorteilhaft ist, wenn das Bleckpaket des Stators keine ausgeprägten Zahnköpfe aufweist, jede Wicklung aus durchgehenden Drähten besteht sowie die Nutbreite etwa der Drahtbreite entspricht Zweckmäßigerweise ist bei der Auslegung des Stators die Nut parallelflankig ausgebildet. Bei kleineren Werten der genannten Zahnbreite zur Jochhöhe von weniger als 0,3 bzw. der genannten Zahnbreite zur Nutbreite von weniger als 0,3 ist bei Bestromung der Eisenkreis des Stators so schwach, dass dieser in Sättigung gelangt, bevor die Maximalleistung der mehrphasigen elektrischen Maschine abgegeben werden kann. Bei Werten von mehr als 0,8 (Zahnbreite zu Jochhöhe) bzw. mehr als 3 (Zahnbreite zu Nutbreite) ist der Eisenkreis zwar gut dimensioniert, jedoch nimmt der Wicklungswiderstand infolge immer kleiner werdender Nutflächen zu. Aus den erfindungsgemäßen Bereichen ergeben sich bevorzugte Nutzahlen im Stator zwischen 60 und 120. Sind weniger Nuten vorgesehen, nimmt der Drahtdurchmesser infolge der sich vergrößernden Nutfläche zu und führt zu starker Stromverdrängung im Draht. Das genannte erfindungsgemäße Verhältnis der Kupfermassen ermöglicht eine vorteilhafte Kühlung des Stators, auch wenn die Nutfläche aufgrund der parallelflankigen Nuten gegenüber trapezförmigen Nuten verkleinert ist und daher weniger Kupfer in die Nut eingebracht werden kann. Die Gesamtmasse des Kupfers im Stator setzt sich aus der Masse des Kupfers in den Nuten, die den elektromagnetisch aktiven Teil bilden, und der Masse des Kupfers in den zugehörigen Wicklungsköpfen, die zur Kühlung dient, gleichzeitig aber auch für den Wicklungswiderstand und somit für die Kupferverluste mitverantwortlich ist, zusammen. Eine ausreichende Kühlung kann trotz der verringerten Kupfermasse erreicht werden. Für Generatoren mit geringerer Eisenlänge des Rotors verschiebt sich das Optimum des Massenverhältnisses zu höheren Werten, für Generatoren mit größerer Eisenlänge zu geringeren Werten.

Ein besonders günstiger Bereich für das Verhältnis von Zahnbreite am Zahnkopf zur Jochhöhe liegt zwischen 0,4 und 0,6, bevorzugt zwischen 0,4 und 0,5.

Ein besonders günstiger Bereich für das Verhältnis von Zahnbreite am Zahnkopf zur Nutbreite am Zahnkopf liegt zwischen 0,5 und 2,5, bevorzugt zwischen 0,7 und 1,6.

Ein besonders günstiger Bereich für das Verhältnis von Kupfermasse des Drahts in den Nuten zur Gesamtkupfermasse des Drahts im Stator liegt zwischen 0,45 und 0,53, bevorzugt zwischen 0,47 und 0,51.

Vorzugsweise weisen die Nuten im Bereich des Zahnkopfs und im Bereich des Nutgrunds eine vergleichbare etwa gleich große Breite auf.

In einer günstigen Ausgestaltung kann eine gute Fixierung der Wicklungen trotz fehlendem ausgeprägten Zahnkopf erreicht werden, wenn deren Drähte einen Wickelkopf aufweisen, der über die Nuten axial herausragt und der Wickelkopf imprägniert ist, wobei die Imprägnierung eines Drahts einer Phase im Wickelkopf durch Imprägnierung mit allen anderen Phasen mindestens eine Berührungsstelle aufweist, die durch Imprägnierung versteift ist.

Das erfindungsgemäße Verfahren zur Herstellung eines Stators für eine mehrphasige elektrische Maschine sieht vor, dass der Kernkörper aus einem Blechpaket gebildet wird, das aus einem Nuten und Zähne aufweisenden Streifen geformt wird, wobei die Streifen, parallel und ineinander verzahnt angeordnet, paarweise aus einem Blechband geschnitten werden. Es fällt wenig Verschnitt an, so dass eine kostengünstige Fertigung möglich ist.

Aus solchen Streifen bzw. streifenförmigen Lamellen kann ein flacher Kernkörper mit aus einem der verzahnt parallelen Streifen dadurch gebildet werden, dass dieser auf eine vorbestimmte Länge abgeschnitten und die dabei gewonnenen Streifenlamellen aneinander geschichtet bzw. paketiert werden. In einem darauf folgenden Verfahrensschritt kann das flache Blechpaket zu einem runden Stator gebogen werden.

Alternativ kann auch ein runder bzw. hohlzylindrischer Kernkörper mit aus einem verzahnten parallelen Streifen schraubenförmig gewickelt werden und die Wicklung dann in das runde Blechpaket eingelegt werden. Dabei wird mit jeder Umdrehung des Streifens um die Zylinderachse eine Lage des Blechpakets auf der vorangehenden Lage gebildet.

In einem günstigen Verfahrensschritt werden die Drähte durch Imprägnierung ihres Wickelkopfs in den Nuten fixiert.

In einem günstigen Verfahrensschritt werden die Runddrähte der Wicklung auf die Nutform des runden Stators verprägt und anschließend in den Stator eingebracht.

### Zeichnungen

Weitere Ausführungsformen, Aspekte und Vorteile der Erfindung ergeben sich auch unabhängig von inher Zusammenfassung in Ansprüchen, ohne Beschränkung der Allgemeinheit aus nachfolgend anhand von Zeichnungen dargestellten Ausführungsbeispielen der Erfindung.

Im Folgenden zeigen:

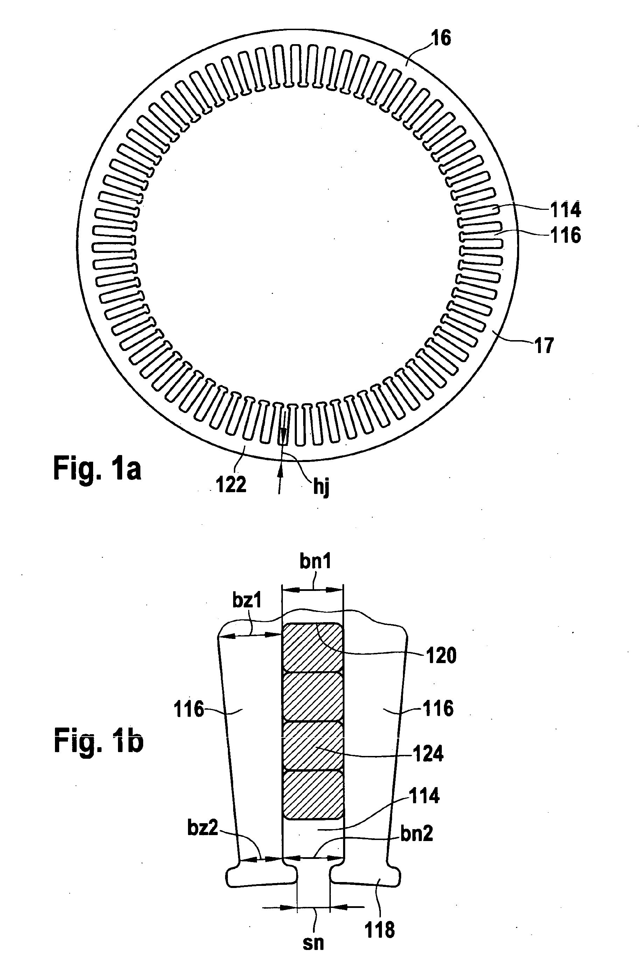

- Fig. 1 a: eine Draufsicht auf einen bevorzugten Stator,
- Fig. 1 b: einen Ausschnitt einer Draufsicht auf einen bevorzugten Stator;
- Fig. 2: einen bevorzugten Verfahrensschritt bei der Fertigung von verzahnten Streifen zur Herstellung eines Stators;
- Fig. 3 a: einen bevorzugten Verfahrensschritt beim Verprägen von Drähten vor dem Einsetzen in einen Stator vor dem Verprägen und

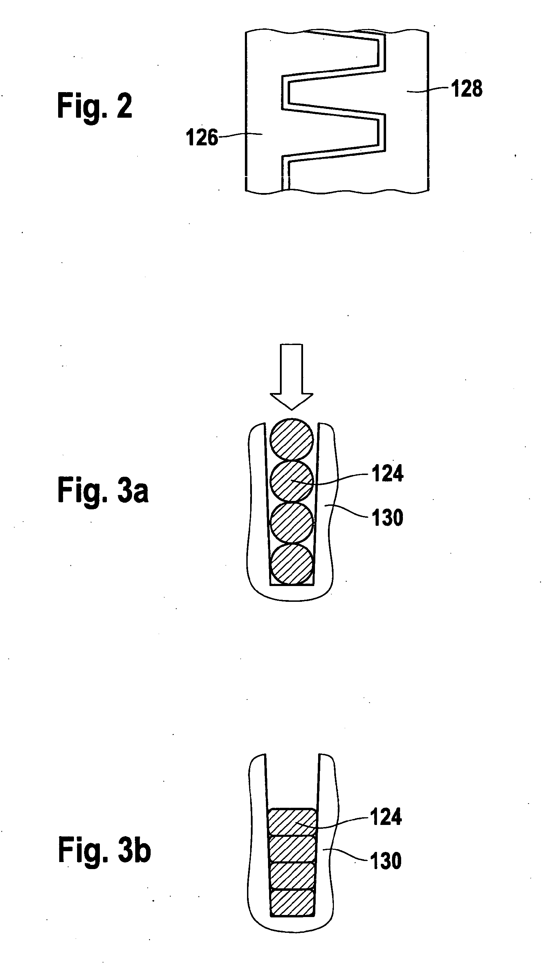

- Fig. 3 b: nach dem Verprägen;

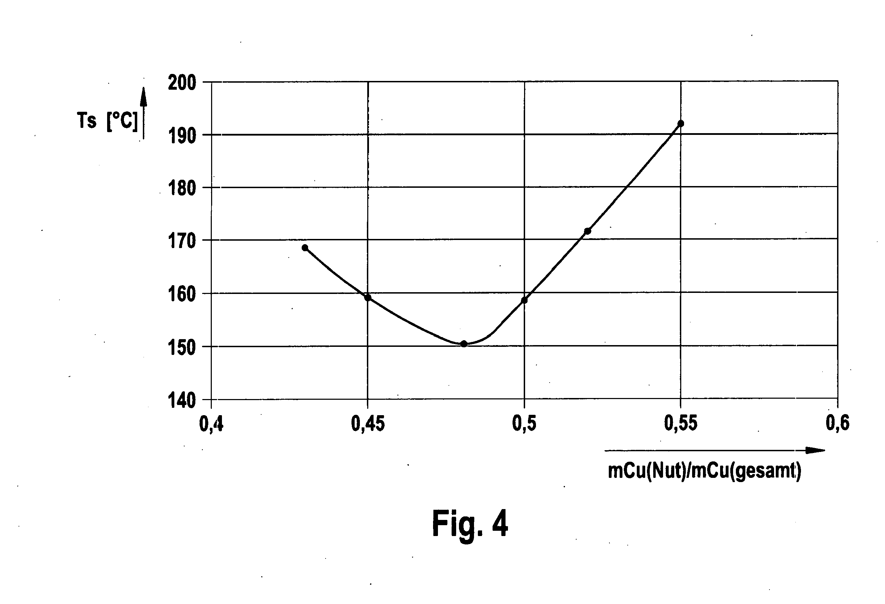

- Fig. 4: einen Temperaturverlauf des Stators über einem Massenverhältnis des Leitermaterials in den Nuten und im Stator insgesamt;

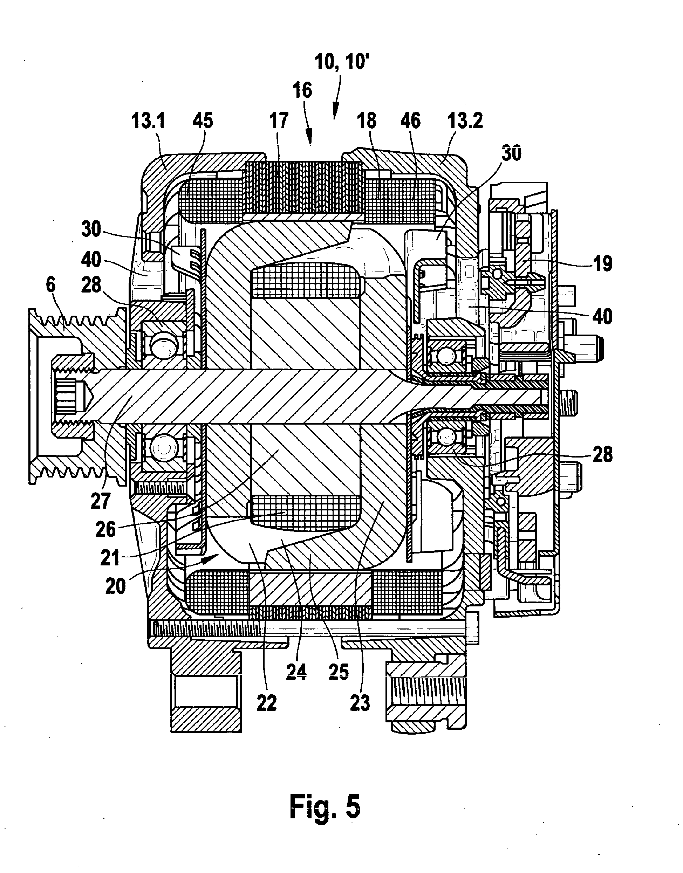

- Fig. 5: eine Schnittdarstellung einer als Klauenpolgenerator ausgebildeten mehrphasigen elektrischen Maschine;

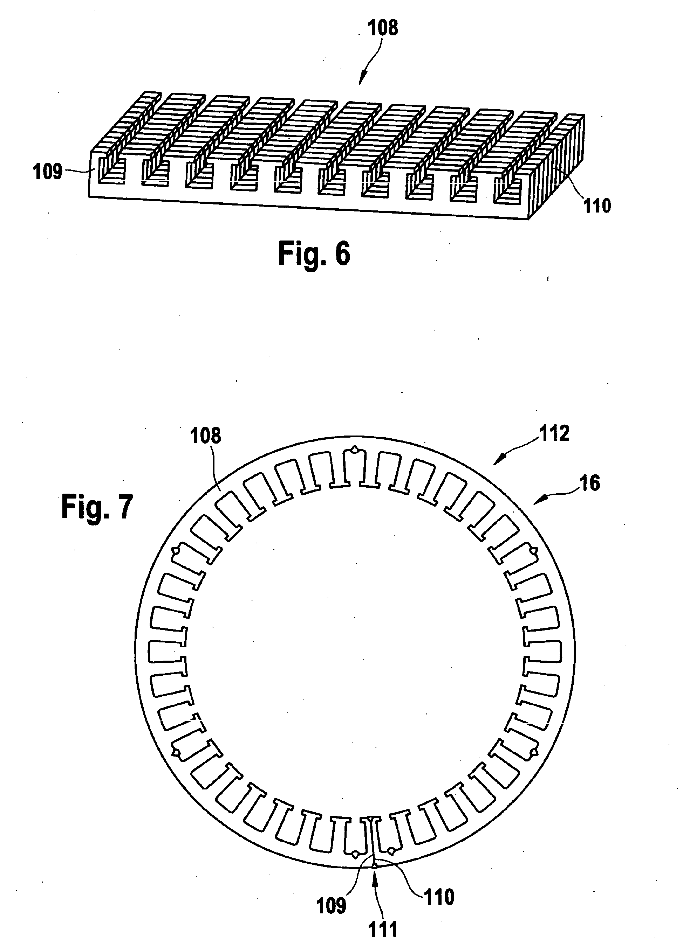

- Fig. 6: ein flaches, quaderförmiges Blechpaket (prinzipiell) und
- Fig. 7: ein zylindrisches Blechpaket aus einem rundgebogenen, vormals flachem Blechpaket (prinzipiell).

### Beschreibung der Ausführungsbeispiele

Die Figur 5 zeigt eine als Generator ausgebildete mehrphasige elektrische Maschine 10, wie sie zum Beispiel in Kraftfahrzeugen verwendet wird. Die elektrische Maschine 10 weist einen Stator 16 mit einem Kernkörper 17 und einer Wicklungsanordnung 18 auf. Der Stator 16 wird mittels zweier Lagerschilde, einem einer Riemenscheibe 6 zugewandten Antriebslagerschild 13.1 und einem Schleifringlagerschild 13.2, getragen. Dabei umgibt der Stator 16 radial einen auf einer Welle 27 angeordneten Rotor 20, der als Klauenpolrotor ausgebildet ist. Der Rotor 20 weist zwei Klauenpolplatinen 22, 23 auf, an deren Außenumfang sich jeweils in axialer Richtung erstreckende, im Wesentlichen trapezförmig ausgebildete Klauenfinger 24, 25 angeordnet sind. Die Welle 27 trägt die beiden gegensätzlich gepolten Klauenpolplatinen, die im Rotor derart angeordnet sind, dass ihre sich in axialer Richtung erstreckenden Klauenfinger ineinander greifen und in Umfangsrichtung einander als Nord- und Südpole abwechseln. Dadurch ergeben sich magnetisch erforderliche Klauenpolzwischenräume zwischen den gegensinnig magnetisierten, sich in Umfangsrichtung gegenüberliegenden Klauenfingern. Die Klauenfingerspitzen von sich in Umfangsrichtung gegenüberliegenden Klauenfingern 24, 25 haben zueinander einen axialen Abstand. Der Rotor 20 ist im Wesentlichen zylinderförmig aufgebaut und weist einen Polkern 26 auf, der die beiden Klauenpolplatinen 22, 23 auf Abstand hält und der von der Erregerwicklung 21 umgeben ist. Die Erregerwicklung besteht aus einer einzigen Ringspule mit einem Polpaar. Die Klauenpolplatinen 22, 23, der Polkern 26 und die Erregerwicklung 21 bilden zusammen den magnetisch aktiven Teil des Rotors 20.

Die Welle 27 ist beidseitig in je einem Wälzlager 28 gelagert, die jeweils in einem der beiden Lagerschilde 13.1, 13.2 angeordnet sind. Hinter dem Schleifringlagerschild 13.2 - außerhalb des Lagerschildes - befindet sich in diesem Ausführungsbeispiel eine nicht näher dargestellte 6-pulsige Brückenschaltung und ein die elektromagnetische Erregung des Rotors 20 regelnder elektrischer Feldregler, der die Erregerwicklung 21 kontaktiert, wobei alternativ sowohl die 6-pulsige Brückenschaltung, als auch der Feldregler innerhalb des Schleifringlagerschildes 13.2 angeordnet sein können. Die 6-pulsige Brückenschaltung ist dabei als Brückengleichrichter 19 ausgebildet. An die beiden Stirnflächen des Rotors 20 schließt sich axial jeweils ein Lüfter 30 an. Die Lüfter 30 dienen der Kühlung der elektrischen Maschine 10, insbesondere des Stators 16 über seine Wickelköpfe 45, 46. Dazu wird Frischluft axial durch Lufteinlassöffnungen 40 angesaugt, in radiale Richtung umgelenkt und auf mindestens einen Teil der Wickelköpfe 45, 46 gelenkt, sodass sie diese kühlt. Die Lüfter 30 sind vorzugsweise als Radiallüfter ausgebildet, können aber auch derartig gestaltet sein, dass sie einzeln oder beide zumindest eine Axialkomponente aufweisen.

Es ergibt sich folgende Funktion der als Generator ausgebildeten elektrischen Maschine 10: Wird die Welle 27 von einem Antrieb, z.B. dem Verbrennungsmotor eines Kraftfahrzeugs, über die Riemenscheibe 6 drehend angetrieben, so läuft der Rotor 20 um und induziert in der Wicklungsanordnung 18 des Stators 16 - bei Stromfluss durch die Erregerwicklung 21 - eine mehrphasige Wechselspannung, die über den Brückengleichrichter 19, in dem eine Wicklungsanordnung 18 des Stators 16 verschaltet ist, gleichgerichtet wird. Alternativ kann die Wicklungsanordnung 18 auch auf oder in der Nähe eines Wickelkopfes verschaltet sein. Durch Erregerstromregelung wird die Größe der Ausgangsspannung auf eine von Drehzahl und Last unabhängige, konstante Spannung geregelt. Der Gleichstrom versorgt die Verbraucher und lädt eine Batterie im Bordnetz

Fig. 1a zeigt eine Draufsicht auf einen bevorzugten Stator 16, bei der aus Gründen der Übersichtlichkeit die Wicklungsanordnung 18 nicht dargestellt ist. Fig. 1 b einen Ausschnitt aus dem bevorzugten Stator 16 für eine mehrphasige elektrische Maschine als Ausschnitt. Der Stator 16 weist einen Kernkörper 17 auf, der in radialer Richtung von einer Drehachse der elektrischen Maschine aus gesehen auf einer Seite parallel zur Längsachse des Kernkörpers 17, die mit der nicht dargestellten Drehachse zusammenfällt, angeordnete Nuten 114, von denen eine Nut 114 im Ausschnitt zu sehen ist, und auf der gegenüberliegenden Seite mit einem Statorjoch 122 versehen ist. Die Nut 114 weist eine erste Nutbreite bn1 am Nutgrund 120 und eine zweite Nutbreite bn2 im Bereich eines Zahnkopfs 118 auf. Jeweils zwei Nuten 114 sind durch einen Zahn 116 voneinander getrennt, der sich von dem Nutgrund 120 bis zu dem Zahnkopf 118 erstreckt.

Die Zähne 116 weisen eine erste Zahnbreite bz1 am Nutgrund und eine zweite Zahnbreite bz2 am Zahnkopf 118 auf und sind mit einer Nutschlitzbreite sn am Zahnkopf 118 beabstandet. "Zahnbreite bz1 am Nutgrund" ist der Abstand, wo sich ggf. die gedachte Weiterführung der Flanken der Zähne mit der gedachten Weiterführung des Nutgrunds kreuzen. Eine derartige Ermittlung der Zahnbreite bz1 ist bspw. dann angezeigt, wenn der Übergang zwischen Flanke und Nutgrund ausgerundet ist. Der Stator 16 kann für einen Außenläufer oder einen Innenläufer ausgestaltet sein. Bei einem Außenläufer ragen die Nuten 114 radial nach außen und das Joch 122 nach innen, für einen Innenläufer ragen die Nuten 114 radial nach innen und das Joch nach außen. Die Zähne 116 weisen im Bereich des Zahnkopfs 118 und im Bereich des Nutgrunds 120 eine vergleichbare Breite auf, d.h. der Zahnkopf 118 ist nicht ausgeprägt ausgebildet und ragt deshalb im Wesentlichen nicht über die Nut hinweg. Die Nutschlitzbreite sn ist im Wesentlichen gleich der Nutbreite bn2 am Zahnkopf 118. Die Darstellung in Fig. 1 b ist dahingehend nur prinzipiell.

Die Nuten 114 sind zur Aufnahme von wenigstens einer Spulenwicklung mit mehreren, elektrisch in Reihe geschalteten Spulen vorgesehen, die aus wenigstens einem durchgehenden Draht 124 unterbrechungsfrei hergestellt ist.

Das Verhältnis bz2/hj von Zahnbreite bz2 am Zahnkopf 118 zur Jochhöhe hj, wobei die Jochhöhe der radiale Abstand zwischen dem Nutgrund 120 im Kernkörper 17 und dem gegenüberliegenden Außendurchmesser des Kernkörpers 17 ist, liegt erfindungsgemäß zwischen 0,3 und 0,8, bevorzugt zwischen 0,4 und 0,6, besonders bevorzugt zwischen 0,4 und 0,5. Für den Fall, dass sich an der Stelle wo sich der Außendurchmesser befindet ebenfalls ein Außenzahn befindet, wird dessen radiale Erstreckung ab einem bogenförmigen durchgehenden Jochteil nicht berücksichtigt. Das Verhältnis bz2/bn2 von Zahnbreite bz2 am Zahnkopf 118 zur Nutbreite bn2 am Zahnkopf 118 liegt erfindungsgemäß zwischen 0,3 und 3, bevorzugt zwischen 0,5 und 2,5, besonders bevorzugt zwischen 0,7 und 1,6.

Beim Einbau des Stators 16 in ein nicht dargestelltes Generatorgehäuse der mehrphasigen elektrischen Maschine ist es sinnvoll, den Stator 16 zwischen generatorübliche Lagerschilde 13.1, 13.2 zu spannen, wobei die Spannflächen als die Anbauflächen für Lagerschilde 13.1, 13.2 ringförmig an den Stirnseiten des Stators 16 sowohl parallel als auch in einem bestimmten Einbauabstand zueinander ausgebildet sind und sich über den magnetisch erforderlichen Teil des Statorjochs 122 radial erstrecken, da die Wicklung radial nach Außen nur wenig über den Nutgrund 120 hinaus aufträgt. Weiterhin ist es günstig, zusätzlich an drei bis vier Stellen nicht näher dargestellte Nuten am Außenumfang des Stators 16 anzuordnen, die es erlauben, Gehäuseschrauben in einem noch kleineren Radius um den Generator anzubringen, z.B. am Nutgrund dieser am Außenumfang des Stators 16 angebrachten Nuten.

Fig. 2 zeigt eine Draufsicht auf zwei verzahnte parallele Streifen 126, 128, wobei die Nuten und Zähne aufweisenden Streifen so angeordnet sind, dass die Streifen parallel zueinander sind und ineinander greifen, um paarweise verschnittarm aus einem Blechband geschnitten zu werden, s. a. WO 01/54254.

Zur Herstellung des Stators 16 wird der Kernkörper 17 aus einem Blechpaket gebildet, das aus den verzahnten parallelen Streifen 126, 128 geformt wird. Dies wird dadurch ermöglicht, dass der Zahnkopf 118 nicht ausgeprägt ist, d.h. in Umfangsrichtung gegenüber dem Zahn nicht übersteht. Die Streifen 126, 128 können, auf eine vorbestimmte Länge abgeschnitten, als Streifenlamellen übereinander zu einem flachen Blechpaket 108 gestapelt und um eine Achse parallel zur Stapelrichtung des Blechpakets mittels Biegeumformen zu einem runden Blechpaket 112 gerollt werden und so den Kernkörper 17 bilden. Anschließend können die Drähte 124 der Wicklung eingeführt werden.

Alternativ kann die Wicklung mit den Drähten 124 in ein flaches Blechpaket 108 eingelegt werden und anschließend zum Stator 16 gebogen werden. Bei einem Blechpaket ist die Nut 114 im flachen Zustand weiter geöffnet als im runden Zustand. Dadurch kann die Wicklung einfacher in das Blechpaket montiert werden.

Die Figur 6 zeigt ein Beispiel für einen Kernkörper 17, ausgebildet als flaches Blechpaket 108, das zwei Paketenden 109, 110 aufweist. Durch Rundbiegen des Blechpakets 108 und anschließendes Verbinden der beiden aneinander liegenden Paketenden 109, 110 entsteht das in Figur 6 gezeigte runde Blechpaket 112 mit einer Stoßstelle 111. Bei einem der erfindungsgemäßen Verfahren wird die Wicklungsanordnung 18 vor dem Rundbiegen in das flache Blechpaket 108 eingebracht, diese ist in Figur 7 nicht dargestellt.

Die Drähte 124 können durch Imprägnierung ihres Wickelkopfs in den Nuten 114 fixiert werden. Dies ist günstig bei Zähnen 116 mit einem Zahnkopf 118, der nicht ausgeprägt ist, also in Umfangsrichtung gegenüber dem Zahn im Wesentlichen nicht übersteht, weil zur Wicklungsmontage in die Nuten 114 die Breite des Nutschlitzes größer sein muss als die des Drahtes. Hierzu ist es vorteilhaft, wenn die Imprägnierung eines Drahts 124 im Wickelkopf durch Imprägnierung mit allen anderen Phasen mindestens eine Berührungsstelle aufweist, die mit Imprägnierung versteift wird.

Es ist vorteilhaft, die Wicklung aus runden Drähten 124 herzustellen und dann auf die Nutform des runden Stators 16 zu verprägen. Hierzu können alle, eine Nut 114 füllende Drähte gemeinsam verprägt werden. Es ist auch vorstellbar, jeden Draht einzeln zu verprägen. Fig. 3a zeigt die runden Drähte 124 in einer Form 130, die die Nutform des runden Stators 16 aufweist, vor dem Verprägen der Drähte 124. Ein Pfeil zeigt die Kraftwirkung auf die Drähte 124 beim Verprägen an. Fig. 3b zeigt die Drähte 124 nach dem Verprägen in der Form 130. Die leicht trapezförmige Form 130 erleichtert das Entformen der Drähte 124. Das Verprägen ermöglicht einen höheren Füllfaktor der Wicklung bzw. Drähte 124 in der Nut 114 zu geringen Kosten. Besonders günstig ist es, wenn die Breite des Werkzeugs zum Verprägen der Wicklung und/oder die innere Endkontur der Form 130 zwischen dem einfachen und 1,49-fachen des ursprünglichen Drahtdurchmessers liegt. Dann können Drahtkreuzungen größtenteils vermieden werden. Eine Verprägung der einzelnen Drähte 124, aber auch aller Drähte 124 zusammen ist möglich.

Fig. 4 zeigt einen Verlauf der Temperatur Ts des Stators 16 als Funktion des Verhältnisses mCu(Nut)/mCu(gesamt) der Kupfermasse mCu(Nut) (bzw. Metallmasse) des Drahts 124 in der Nut 114 zur Gesamtkupfermasse mCu(gesamt) (bzw. Gesamtmetallmasse) des Drahts 124. Der Draht 124 ist vorzugsweise aus Kupfer. Das Verhältnis mCu(Nut)/mCu(gesamt) liegt erfindungsgemäß zwischen 0,43 und 0,55, bevorzugt zwischen 0,45 und 0,53, besonders bevorzugt zwischen 0,47 und 0,51. Bei kleineren Massenverhältnissen ist die Temperatur Ts hoch, z.B. um 170°C und fällt auf ein Minimum von z.B. 150°C, während sie dann zu höheren Massenverhältnissen wieder ansteigt.

## Patentansprüche

1. Stator (16) für eine mehrphasige elektrische Maschine, mit einem Kernkörper (17), der in radialer Richtung in Bezug zu einer Drehachse der elektrische Maschine auf einer Seite des Kernkörpers (17) parallel zur Längsachse des Kernkörpers (17) angeordnete Nuten (114) mit einer Nutbreite (bn1, bn2) und auf der gegenüberliegenden Seite mit einem Statorjoch (122) versehen ist, wobei jeweils zwei Nuten (114) durch einen Zahn (116) mit einer Zahnbreite (bz1,bz2) voneinander getrennt sind und die sich von einem Nutgrund (120) bis zu einem Zahnkopf (118) erstrecken, welche Nuten (114) zur Aufnahme von wenigstens einer Spulenwicklung mit mehreren, elektrisch in Reihe geschalteten Spulen vorgesehen sind, die aus wenigstens einem durchgehenden Draht (124) unterbrechungsfrei hergestellt ist, **dadurch gekennzeichnet, dass** das Verhältnis von Zahnbreite (bz2) am Zahnkopf (118) zur Jochhöhe (hj) zwischen 0,3 und 0,8 und das Verhältnis von Zahnbreite (bz2) am Zahnkopf (118) zur Nutbreite (bn2) am Zahnkopf (118) zwischen 0,3 und 3 liegt, und/oder dass das Verhältnis von Kupfermasse des Drahts (124) in der Nut (114) zur Gesamtkupfermasse des Drahts (124) zwischen 0,43 und 0,55 liegt.

2. Stator nach Anspruch 1, **dadurch gekennzeichnet, dass** das Verhältnis von Zahnbreite (bz2) am Zahnkopf (118) zur Jochhöhe (hj) zwischen 0,4 und 0,6 liegt.

3. Stator nach Anspruch 1 oder 2, **dadurch gekennzeichnet, dass** das Verhältnis von Zahnbreite (bz2) am Zahnkopf (118) zur Jochhöhe (hj) zwischen 0,4 und 0,5 liegt.

4. Stator nach einem der vorhergehenden Ansprüche, dadurch gekenntzeichnet, dass das Verhältnis von Zahnbreite (bz2) am Zahnkopf (118) zur Nutbreite (bn2) am Zahnkopf (118) zwischen 0,5 und 2,5 liegt.

5. Stator nach einem der vorhergehenden Ansprüche, **dadurch gekennzeichnet, dass** das Verhältnis von Zahnbreite (bz2) am Zahnkopf (118) zur Nutbreite (bn2) am Zahnkopf (118) zwischen 0,7 und 1,6 liegt.

6. Stator nach einem der vorhergehenden Ansprüche, **dadurch gekennzeichnet, dass** das Verhältnis von Kupfermasse (mCu(Nut)) des Drahts (124) In den Nuten (114) zur Gesamtkupfermasse (mCu(gesamt)) des Drahts (124) im Stator (16) zwischen 0,45 und 0,53 liegt.

7. Stator nach einem der vorhergehenden Ansprüche, **dadurch gekennzeichnet, dass** das Verhältnis von Kupfermasse (mCu(Nut)) des Drahts (124) in den Nuten (114) zur Gesamtmasse (mCu(gesamt)) des Drahts (124) im Stator (10) zwischen 0,47 und 0,51 liegt.

## Claims

1. Stator (16) for a polyphase electrical machine, having a core body (17) which is provided, in the radial direction in relation to a rotation axis of the electrical machine, with slots (114) which are arranged on one side of the core body (17) parallel to the longitudinal axis of the core body (17) and have a slot width (bn1, bn2), and is provided with a stator yoke (122) on the opposite side, wherein in each case two slots (114) are separated from one another by a tooth (116) with a tooth width (bz1, bz2) and the said two slots extend from a slot base (120) to a tooth head (118), which slots (114) are intended to accommodate at least one coil winding having a plurality of coils which are connected electrically in series, which winding coil is produced from at least one continuous wire (124) without interruption, **characterized in that** the ratio of tooth width (bz2) at the tooth head (118) to the yoke height (hj) is between 0.3 and 0.8, and the ratio of tooth width (bz2) at the tooth head (118) to the slot width (bn2) at the tooth head (118) is between 0.3 and 3, and/or **in that** the ratio of copper mass of the wire (124) in the slot (114) to the total copper mass of the wire (124) is between 0.43 and 0.55.

2. Stator according to Claim 1, **characterized in that** the ratio of tooth width (bz2) at the tooth head (118) to the yoke height (hj) is between 0.4 and 0.6.

3. Stator according to Claim 1 or 2, **characterized in that** the ratio of tooth width (bz2) at the tooth head (118) to the yoke height (hj) is between 0.4 and 0.5.

4. Stator according to one of the preceding claims, **characterized in that** the ratio of tooth width (bz2) at the tooth head (118) to the slot width (bn2) at the tooth head (118) is between 0.5 and 2.5.

5. Stator according to one of the preceding claims, **characterized in that** the ratio of tooth width (bz2) at the tooth head (118) to the slot width (bn2) at the tooth head (118) is between 0.7 and 1.6.

6. Stator according to one of the preceding claims, **characterized in that** the ratio of copper mass (mCu(slot)) of the wire (124) in the slots (114) to the total copper mass (mCu(total)) of the wire (124) in the stator (16) is between 0.45 and 0.53.

7. Stator according to one of the preceding claims, **characterized in that** the ratio of copper mass (mCu(slot)) of the wire (124) in the slots (114) to the total copper mass (mCu(total)) of the wire (124) in the stator (10) is between 0.47 and 0.51.

## Revendications

1. Stator (16) pour une machine électrique pluriphasée, avec un corps de noyau (17), pourvu, dans la direction radiale par rapport à un axe de rotation de la machine électrique, sur un côté du corps de noyau (17), de rainures (114) disposées parallèlement à l'axe longitudinal du corps de noyau (17) avec une largeur de rainure (bn1, bn2) et sur le côté opposé avec un joug de stator (122), respectivement deux rainures (114) étant séparées l'une de l'autre par une dent (116) présentant une largeur de dent (bz1, bz2) et s'étendant d'une base de rainure (120) jusqu'à une tête de dent (118), lesdites rainures (114) étant prévues pour recevoir au moins un enroulement de bobine pourvu de plusieurs bobines connectées en série sur le plan électrique et fabriquées sans interruption à partir d'au moins un fil (124) traversant, **caractérisé en ce que** le rapport de la largeur de dent (bz2) au niveau de la tête de dent (118) sur la hauteur de joug (hj) est compris entre 0,3 et 0,8 et que le rapport de la largeur de dent (bz2) au niveau de la tête de dent (118) sur la largeur de rainure (bn2) au niveau de la tête de dent (118) est compris entre 0,3 et 3 et/ou que le rapport de la masse de cuivre du fil (124) dans la rainure (114) sur la masse totale de cuivre du fil (124) est compris entre 0,43 et 0,55.

2. Stator selon la revendication 1, **caractérisé en ce que** le rapport de la largeur de dent (bz2) au niveau de la tête de dent (118) sur la hauteur de joug (hj) est compris entre 0,4 et 0,6.

3. Stator selon la revendication 1 ou 2, **caractérisé en ce que** le rapport de la largeur de dent (bz2) au niveau de la tête de dent (118) sur la hauteur de joug (hj) est compris entre 0,4 et 0,5.

4. Stator selon l'une quelconque des revendications précédentes, **caractérisé en ce que** le rapport de la largeur de dent (bz2) au niveau de la tête de dent (118) sur la largeur de rainure (bn2) au niveau de la tête de dent (118) est compris entre 0,5 et 2,5.

5. Stator selon l'une quelconque des revendications précédentes, **caractérisé en ce que** le rapport de la largeur de dent (bz2) au niveau de la tête de dent (118) sur la largeur de rainure (bn2) au niveau de la tête de dent (118) est compris entre 0,7 et 1,6.

6. Stator selon l'une quelconque des revendications précédentes, **caractérisé en ce que** le rapport de la masse de cuivre (mCu(Nut)) du fil (124) dans les rainures (114) sur la masse totale de cuivre (mCu(gesamt)) du fil (124) dans le stator (16) est compris entre 0,45 et 0,53.

7. Stator selon l'une quelconque des revendications précédentes, **caractérisé en ce que** le rapport de la masse de cuivre (mCu(Nut)) du fil (124) dans les rainures (114) sur la masse totale de cuivre (mCu(gesamt)) du fil (124) dans le stator (10) est compris entre 0,47 et 0,51.
